# EUROPEAN PATENT SPECIFICATION

(11) **EP 1 979 840 B1**
(45) Date of publication and mention of the grant of the patent: **23.04.2014**
(21) Application number: 07705057.3
(22) Date of filing: 29.01.2007
(51) Int. Cl.: G06F 11/34, H04L 29/08, G06F 17/30

(54) **WEBSITE MONITORING AND COOKIE SETTING**
WEBSITE-ÜBERWACHUNG UND COOKIE-EINSTELLUNG
SURVEILLANCE DE SITE WEB ET RÉGLAGE DE MOUCHARD ÉLECTRONIQUE

(30) Priority: 31.01.2006 GB 0601939; 10.02.2006 US 772409 P
(43) Date of publication of application: 15.10.2008
(73) Proprietor: Speed-trap.com Ltd., Newbury, Berkshire RG19 6HN (GB)
(72) Inventor: GOLDSPINK, Lincoln, Mark, Vaughan, Hampshire SO52 9NY (GB); DUCKETT, Malcolm, John, Hampshire GU34 5LY (GB)
(74) Representative: Faulkner, Thomas John
(86) International application number: PCT/GB2007/000290
(87) International publication number: WO 2007/088334

(56) References cited:
- WO-A-00/75827
- WO-A-01/69386
- WO-A-97/26729
- GB-A- 2 383 505
- US-B1- 6 510 439
- BERRY W: "15 Seconds: Sharing Cookies across domains" INTERNET CITATION, [Online] 11 August 1997 (1997-08-11), XP002405758 Retrieved from the Internet: URL:http://www.15seconds.com/issue/971108. htm> [retrieved on 2006-11-06]
- C. KINGS-LYNNE: "Implementing Cross-Domain Cookies" PHP BUILDER ARTICLES, [Online] 29 November 2000 (2000-11-29), pages 1-3, XP002430749 Retrieved from the Internet: URL:http://www.phpbuilder.com/columns/inde x.php3?chriskings20001128.php3> [retrieved on 2007-04-24]
- P. ZUMSTEIN, T. LARHOLM: "Microsoft Internet Explorer Flaw in OBJECT Domain Security Enforcement Lets Remote Users Execute Code in Arbitrary Domains" SCURITY TRACKER, [Online] 11 July 2002 (2002-07-11), pages 1-3, XP002430750 Retrieved from the Internet: URL:http://www.securitytracker.com/alerts/ 2002/Jul/1004746.html> [retrieved on 2007-04-24]
- THE U.S. DEPARTMENT OF ENERGY, COMPUTER INCIDENT ADVISORY CAPABILITY: "WHAT ARE COOKIES ?" INFORMATION BULLETIN: INTERNET COOKIES, [Online] 12 March 1998 (1998-03-12), pages 1-9, XP002145971 Retrieved from the Internet: URL:http://gsbwww.uchicago.edu/computing/c ookies.html> [retrieved on 2000-08-29]

## Description

This invention relates to website monitoring and the setting of cookies on client devices.

The invention as it relates to the setting of cookies on client devices is of use in website monitoring, but can also have other uses.

Website monitoring or web analytics in itself is now fairly commonplace. Website monitoring/website analytics is used to monitor the performance and use of an organisation's website to help understand problems and ultimately improve the effectiveness of the site by improving "metrics" such as conversion rates and user experience, or preventing or detecting undesirable behaviour such as fraud.

What is now generally considered to be the method of choice for such monitoring is a technique which may be described as involving "client side page tagging". These techniques in themselves are well understood and one such technique has been used for some time by the Applicants. An early version of this technique is explained in detail in the Applicant's earlier applications WO01/69412 and WO01/69386. In such techniques it is now typical to put some script (for example JavaScript or Visual Basic Script) within a selection or each and every page of a website. As each page is visited this script causes there to be communication with a server responsible for the collection of events describing users journeys/interactions with the website and managing any necessary interaction with the client.

This approach however means that scripts running in one page during a visitor's use of a monitored site will have no way of communicating with scripts running in previous or subsequent pages viewed during the visit. This necessitates a mechanism that can link the data from such a sequence of pages into one "session". The maintenance of this "session continuity" has been commonly achieved via the use of cookies, where the cookie is used to store a session ID. Cookies are only accessible within the domain in which they are set.

Here and throughout the specification, the expression "domain" is used in the sense used in relation to the Internet and "domain names". Thus a domain is defined by a internet address xxx.com or xxx.co.uk and so on- i.e. by a top level domain name.

Cookies can be set or read by scripts running in the client browser, or by a web server communicating with the client.

Two types of cookies exist, these being first and third party cookies.
First party cookies are cookies that have been set within the domain of the page being viewed. This can be achieved by using either scripts executing within the page or by the webserver(s) that are in the domain of the current page through the use of HTTP "set cookie" headers.

Third party cookies are those that are set through the use of the HTTP "set cookie" headers by webserver(s) that are not in the domain of the current page (these are third party webservers).

Script executing in the current page cannot read or set third party cookies. Any webserver communicating with a client will only be sent cookies currently known to the browser that are within the webserver's domain. This behaviour is part of the browser security model.

Hence third or first party cookies can be used to maintain session continuity. However, only third party cookies are able to maintain session continuity between domain. Due to security concerns, third party cookies are typically blocked by modem clients. This means that cross domain session tracking using third party cookies is ineffective.

Without third party cookies therefore, accurate cross domain session tracking has been impossible. Whilst there are circumstances where the use of third party cookies may be illegitimate or undesirable there can be circumstances where maintaining session continuity across domains is legitimate and desirable.

There are situations where this may be useful to the user and/or to an organisation which maintains websites in several different domains.

It is fairly typical for large organisations to maintain a number of websites which reside in different domains. There may, for example, be a different website for different areas of the business or a different website for each country (eg a .com site, a .co.uk site and so on). Thus, there may be a single enterprise with websites in different domains and the current technologies as outlined above are incapable in practical terms of allowing website monitoring across these different websites as they are visited by a user. Thus, for example, session continuity might be lost just as the user is moving to a point where he is about to make a purchase or a booking if that part of the operation is handled by a website running within a different domain.

Thus, an enterprise can be left in a situation where it has monitoring information in respect of each of its websites and could well know that many of these individual "partial sessions" in respect of the separate websites will actually relate to a single user and a single browser instance navigating across their various websites, but yet be unable to follow the whole interaction.

Brute force methods for trying to re-connect such partial sessions to give the overall picture are in reality complex, costly and unreliable. Such techniques generally only provide a best guess as to which partial sessions snap together.

Other methods exist to maintain session context across domains. Many of these are geared towards providing a single log-in across multiple domains. These typically use a series of requests and redirects to achieve the desired results. Such techniques are complex to implement and maintain.

Other possible solutions may use a customer database to maintain context. However, this approach causes problems because the customer ID will not necessarily be known at the start of a session and therefore initial phases of a visit cannot be related to later phases on other domains.

The Applicants had au objective to alleviate this problem in maintaining session context particularly in the field of website monitoring, but it is considered that the resulting invention can have a broader application than this.

Berry W "15 Seconds: Sharing Cookies across domains", internet citation, 11 August 1997, describes a method for sharing cookies across domains which makes use of a series of re-directs.

C. Kings-Lyne "Implementing Cross-Domain cookies" PHP Builder Articles, 29 November 2000, pages 1-3, describes a method for sharing cookies across domains using dynamic URL re-writing.

According to a first aspect of the present invention there is provided a method for setting a second domain first party cookie on a client device as claimed in claim 1.

The active page may be supplied to the client device from a page server.

The server may be separate from but in the same domain as a page server.

The cookie may be a session cookie or a permanent cookie.

The step of extracting data from the cookie present in the header of the http message may comprise the step of extracting a session ID from the cookie. The message sent to the active page may include an instruction to generate a cookie including a session ID determined in dependence on the extracted session ID. The instruction may be an instruction to generate a cookie including a session ID that is the same as the extracted session ID.

The method may comprise the further step of receiving further messages from the same page and/or another page within the browser that include data derived from the generated cookie. The furfher messages may include a session ID derived from the generated cookie. The data derived from the generated cookie may comprise the generated cookie itself.

The method may comprise the further step of the server receiving a plurality messages and determining whether the messages are from the same browser session in dependence an the data, derived from the generated cookie, present in each message.

The method may comprise the further step of the server receiving a plurality messages and determining whether the messages are from the same browser session in dependence on the session IDs present in each message.

There may be a collection server for collecting monitoring information concerning website interactions and/or performance. The method may comprise the step of receiving, from the browser running on the client device, monitoring information concerning webpage interactions and/or performance. The collection server may be separate from said server. Preferably, the server comprises a collection server for collecting monitoring information concerning webpage interactions and/or performance. Where the generated cookie includes a session ID which is based on the data extracted from the cookie present in the header of the http message, this can help to tie together monitoring information from a session where a number of different websites in different domains are visited.

Provided that the "landing page" - ie first page in a chain - is in the same domain as the collection server, cross domain monitoring can still be achieved while at least one page of each domain visited is constructed to generate an http message to the server and generate an appropriate cookie including a session ID in response to receipt of an instruction to do so by the server. It will be appreciated that the log of monitoring information will start the first time a browser session loads a page from the appropriate domain where that page includes the relevant structure to send an http message to the server - it is irrelevant whether or not other pages have been loaded previously. Similarly, if in one session the user starts in the domain of the server but then navigates to sites that are not covered by the system or to pages in covered sites that do not contain the appropriate script, no monitoring information will be gathered from these pages/sites but as soon as an appropriately set up page is loaded monitoring can continue.

The message from the active page may comprise a request for a page component. The message from the active page may comprise an http request.

In general terms in this specification the client device may be any device capable of supporting a browser- In general terms in this specification a browser may be any module capable of allowing the browsing of pages that can generate and receive messages, in particular which can send messages including http headers. As will be clear, in one example, the client device may comprise a PC running conventional browser software such as MS Internet Explorer (RTM), but in other examples the client device might be a mobile telephone or other such device and may include an embedded browser.

According to a second aspect of the present invention there is provided apparatus for causing setting of a second domain first party cookie on a client device as claimed in claim 13.

According to a third aspect of the present invention there is provided a website monitoring method system as claimed in claim 14.

Said server defined in a) may comprise the collection server defined in b).

According to a fourth aspect of the present invention there is provided a client device arranged for setting a second domain first party cookie as claimed in claim 16.

In general terms each of the optional features defined above in relation to the first aspect of the invention are equally applicable to the other above aspects invention, with the necessary changes in wording and where context allows and within the scope of the claims. Thus, it will be understood that the apparatus, systems, and computers defined above may be arranged under the control of software to carry out the optional steps defined above. Similarly they may comprise modules for carrying out the appropriate actions. Moreover, where a step is carried out by the server there will often be a corresponding step carried out by the client and clearly therefore the method operated by the client can include such steps and the client can be arranged/have modules to carry those steps out.

These optional features are not restated multiple times purely in the interests of brevity.

In a development of each aspect of the invention a set of servers may be provided each arranged to follow a method as defined above and each residing in a respective different domain. The step of determining which data is to be included in a cookie resident on the client device as carried out by each server may include the step of determining whether one of the servers in the set has already issued a message to that client device.

The method may comprise the step of providing a set of servers, each server provided in a respective different domain and each arranged for operating the above method. The method may comprise the further step of sending from at least one of the servers to at least one other device information concerning data extracted from cookies present in the headers of http messages by that server and/or information concerning data which is determined should be included in cookies resident on client devices by that server. The method may comprise the steps of the server receiving information from another device and using that information in the step of determining data which is to be included in a cookie resident on the client device. Said other device may comprise another server in the set, or a device in communication with another server in the set.

The apparatus may comprise a set of servers each server provided in a respective different domain and each arranged as defined above. The servers may be connected to one another and/or to a common location to allow flow of information concerning data extracted from cookies present in the headers of http messages in each server and/or information concerning the data which is determined should be included in cookies resident on client devices in each server.

In such a way it can be possible to retain session context as a user navigates to websites across a set of domains (that corresponds to the set of servers), irrespective of the starting point (within that set of domains) of the navigation session.

The monitoring method and system can, of course, involve the use of a set of servers so that monitoring may be conducted across the set of domains irrespective of the starting point of the session. There may be a corresponding set of collection servers, for example, each of said servers may also act as a collection server. There may be a different number of collection servers to the number of servers. There may be a common, in some instances single, collection server. Information to preserve session context may flow to a common collection server or between a plurality of collection servers.

According to a fifth aspect of the present invention there is provided a computer program comprising code portions which when loaded and run on a computer cause the computer to carry out any one of the methods defined above.

Embodiments of the present invention will now be described by way of example only with reference to the accompanying drawings in which:
Figure 1 schematically shows architecture that may be used in a website monitoring system;
Figure 2 schematically shows a sequence diagram of client/server interactions in the operation of part of the website monitoring system;
Figure 3 is a flow chart showing the process carried out at a cookie control server of the website monitoring system; and
Figure 4 shows a flow chart showing the process carried out at a client device when interacting with the cookie control server.

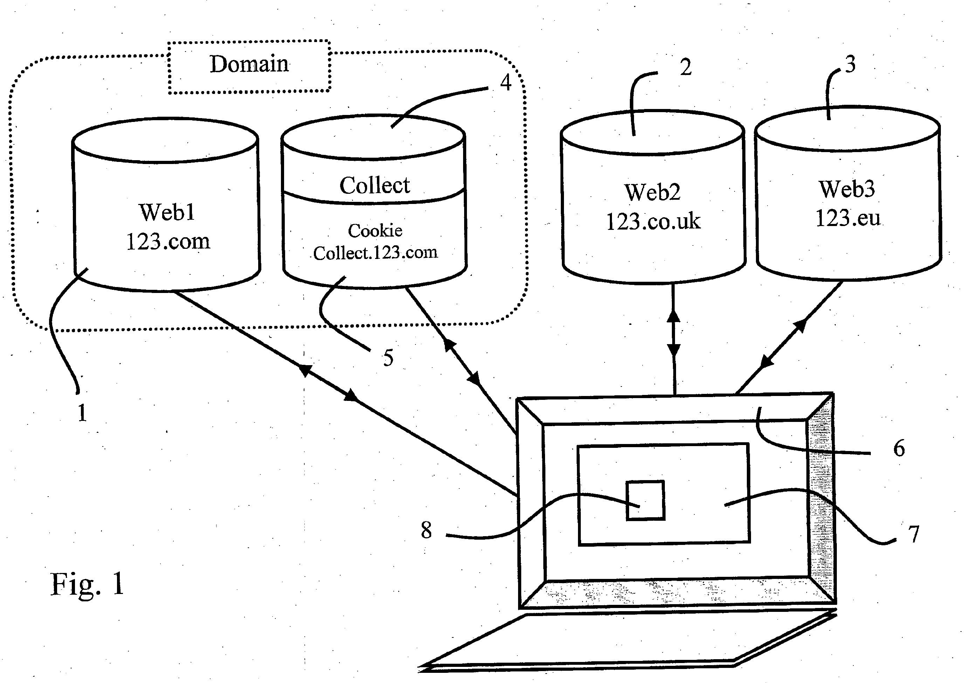

Figure 1 schematically shows architecture that may be used in a website monitoring system which uses client side page tagging to generate and collect a series of events describing a user's journey/interactions with a number of websites.

The architecture comprises a first web server 1 in the domain 123.com, a second web server 2 in the domain 123.co.uk and a third web server 3 in the domain 123.eu. There is also a collection server 4 located in the same domain as the first web server, i.e. in the 123.com domain. In this embodiment, the collection server 4 also comprises a cookie control server 5 which in other embodiments might be separate from the collection server 4. A client device 6 running a browser 7 is connectable to each of the web servers 1,2,3 and the collection server 4 via a network for example via the internet. In this embodiment the client device 6 comprises a conventional PC with conventional components allowing the browser 7 to be run on the computer 6 and allowing the browser 7 to receive web pages from the web servers 1,2,3 (via the use of HTTP messages) and to send and receive http messages to and from the collection server 4.

A user may use the client device 6 to browse web pages supplied from the web servers 1,2,3, but also may, of course, browse to any other web pages which he or she chooses. In the present example, the three web servers, 1,2,3 all belong to the same enterprise, but yet are in different domains. In particular the first web server 1 is in the 123.com domain whereas the second web server 2 is in the 123.co.uk domain and the third web server 3 is in the 123.eu domain.

In the current example we are interested in being able to monitor the web site performance of web sites hosted by each of these three servers 1,2,3 and in particular this is to be done by collecting, at the collection server 4, information concerning the user's interactions with web sites hosted on each of the web servers 1,2,3 when using the client device 6. Moreover, the present invention is directed at allowing the user's interactions with websites from each of the web servers 1,2,3 to be associated together and treated as a single session for the purposes of analysing the monitoring information.

The actual techniques used for monitoring the user's interactions with each of the websites and collecting this information at the collection server as well as for analysing this information and so on are not of particular interest in the present specification. There are a number of conventional techniques which may be used in that part of the process.

What is of interest in the present specification, is the process used for tying together information collected by the collection server 4 concerning the user's interactions with websites hosted on the different web servers 1,2,3 and therefore located in different domains.

In the invention use is made of first party cookies to retain session continuity; that is to say to allow interactions with websites on each of the web servers 1,2,3 to be associated with one another.

It will be appreciated that the mention of three different web servers and three different web sites is completely arbitrary and the present technique can work with practically any number of suitably set up web sites. Similarly, of course, there may be almost any number of users interacting with the monitored sites using respective client devices 6.

When the user is browsing web sites using the client device 6, he may visit any number of web sites in any order, but we are interested in the mechanisms which can occur once the user has visited a website provided from the first web server 1. This is because this first web server 1 is in the same domain as the collection server, or more particularly in the same domain as the cookie control server 5 and this allows the present technique to function using first party cookies. After the user has visited a page from the first web server 1, the situation is such that the mechanism explained below can function as the user visits appropriately set up web pages from different web sites.

If the user visits web pages which are not appropriately set up, then monitoring of interactions with those web pages will not be carried out. However, as and when the user browses to a page which is appropriately set up, monitoring can be recommenced and associated with the monitoring which took place earlier provided it is still within the same browser session. This limitation to the interactions only being tied up if taking place within the same browser session comes about because the present embodiment makes use of first party session cookies. In a currently less preferred embodiment, it would be possible to implement the same system whilst making use of first party permanent cookies and in such a case it would be possible to tie up interactions whether or not they came from the same browser session, provided they came from the same browser and the permanent cookie was in place.

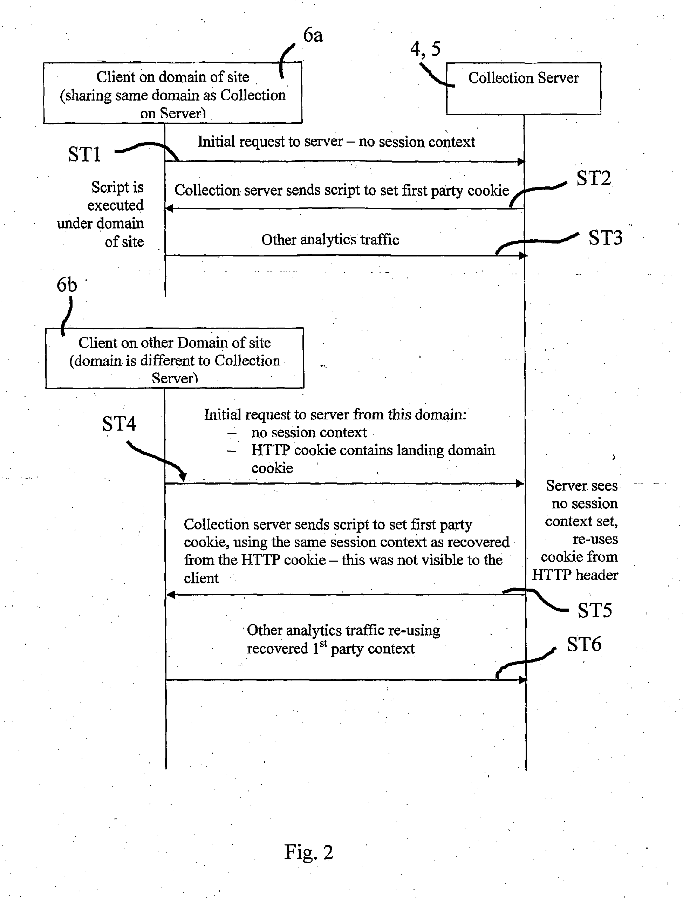

Figure 2 is a sequence diagram showing the client/server interactions which take place as the user uses the client device 6 to first of all visit a web site provided on the first web server 1 and hence in the same domain as the collection server 4 and then subsequently visits a web site in a different domain, provided on say, the second web server 2.

Referring now to Figure 2 the first stage in this process occurs with the client device 6 having a page 8 from the first web server 1 loaded into its browser 7. In Figure 2 the client in this situation is indicated by reference numeral 6a.

The page 8 contains appropriate code such that an initial request for a page component can be sent to the collection server 4 and communication with the collection server facilitated. This code may comprise an "include" statement. The page 8 includes this code because it has been "client side tagged" in the way which is now conventionally used when monitoring the performance of websites. Whilst this client side tagging technique and the monitoring process itself are not described in detail in the current specification, it will be appreciated both that these techniques in themselves are conventional.

It is also important to note, however, that in the present embodiment the page 8 must be set up appropriately to generate messages, receive messages and process these accordingly. This means that the monitoring process used is self-contained in that the web pages to be monitored must be written to facilitate this monitoring. This means that if a user navigates to a page which is not appropriately set up, no monitoring will occur. This means that the current technique can be used in a way where there is no risk to the user that all of his or her activities will be monitored. This makes the current techniques more practical as they are acceptable.

Returning now to the detail of the process, in step ST1, the page 8 sends an initial http request for a page component to the collection server 4. At this point there is no session context. In response to this request the collection server 4, in particular the cookie control server 5, sends in step ST2 script to the page 8 which includes an instruction to set a first party cookie within the browser 7. This script is then executed by the page 8. Because this processing occurs in the page, it occurs under the domain of the site being monitored and this allows the setting of a first party cookie. Once this first party cookie is in place, then as monitoring (or analytics) traffic is sent back to the collection server 4 in step ST3 from the original page 8 or other pages 8 which are appropriately set up, information contained in the first party cookie for that domain will be included in the messages to the collection server 4. In particular each such message may include a session ID to allow all of the monitored activities of the user in that browser session, whilst in the original domain, to be tied together.

At some point the user may leave the original domain and browse to other web sites such that a page 8 running within the browser 7 is from a different domain. In this example, we shall assume that the user has navigated to a page 8 supplied by the second web server 2 and hence is now in the domain 123.co.uk whereas the collection server is in the domain 123.com. The client device in this situation is referenced by reference numeral 6b in Figure 2. Again assuming the page 8 loaded from the second web server 2 is appropriately set up and includes code that requests a page component from the collection server 4, then in step ST4 an initial http request will be sent from the page 8 to the collection server 4. At this point in time there will be no session context, but due to the way in which http messages are arranged to function, the header of the http request generated by the page 8 in ST4 will include in it the first party cookie for the 123.com domain set as a result of step ST1 and ST2. This is because the http request is being sent to the collection server 4 which is in the appropriate domain for the 123.com first party cookie. This means that although the browser 7 at that point on the client device 6b cannot see the first party cookie because the browser itself is operating in another domain, i.e. 123.co.uk rather than 123.com, the collection server 4 can see this 123.com first party cookie.

At this stage the collection server 4 can make use of the cookie in the http header. In the current embodiment the collection server 4 (in particular the cookie control server 5) first determines if there is a session context in respect of this (123.co.uk) domain and only uses the cookie from http header if there is no such context. At this stage in the present example there is no such context because this browser instance has not visited the 123.co.uk domain previously. (In this embodiment if there were already an appropriate first party cookie for the 123.co.uk domain that would be used to set the session ID).

Therefore the cookie from the http header is used and in step ST5 the collection server 4 sends script to the page 8 in the user device 6 to generate a first party cookie in the browser 7 which uses the same session context as recovered from the cookie in the http header received in step ST4. Once this cookie has been set in the browser 7 then again other analytics traffic may be sent to the collection server 4 in step ST6 making use of the same session ID as recovered from the original first party cookie. Thus session continuity can be maintained.

In an alternative to the above approach after step ST4, the contents of the http cookie could be considered first before looking to see if there is any session context within the new domain (i.e. 123.co.uk). This could be advantageous because it would ensure that the information gathered in the partial session above indicated at step ST3 would be tied together with the partial session which is about to start in the 123.co.uk domain even if the 123.co.uk domain had been visited before. Otherwise the new partial session in the 123.co.uk domain would be tied with any partial session which had taken place with respect to domain 123.co.uk before the partial session of in domain 123.com had occurred. It might also be possible to in fact link all three of such partial sessions together by appropriate tieing of the different session IDs.

If after the set of interactions shown in Figure 2, the user were to navigate to a page from the third web server 3, then assuming that that page was appropriately set up, the above process could repeat again. Again, as a page from the third web server 3 requested a page component, i.e. script from the collection server 4, this http request would be accompanied by the original first party cookie for the 123.com domain and the session context could be extracted from this by the collection server 4 and returned to the page in the user device 6 such that a new first party cookie for that domain, i.e. the 123.eu domain could be generated in the page and set.

It should be noted that there is no requirement for the collection server 4, cookie control server 5, and first web server 1 to be physically located in the same place. All that is required is that they are within the same domain. Thus, the collection server 4 and cookie control server 5 may be hosted elsewhere and might have an address such as "collect. 123.com". This would be indicative of the collection server and cookie control server 4,5 being hosted somewhere different, but still being within the same 123.com domain.

In a practical set up, an enterprise having a portal website in one domain would have the corresponding collection server 4 and cookie control server 5 set up in that domain. The idea here would be that a user would first visit the portal website and hence visit the domain of the collection server 4 first of all and then might navigate away to websites of the enterprise which were in a different domain. Yet with the present techniques, the enterprise would still be able to gather monitoring information concerning a user's interactions with both the initial portal website and website subsequently visited.

If the portal site is not the first to be visited, then in general terms the session continuity could start from the point at which the portal site were visited.

It will be appreciated that the invention is not restricted to use with enterprises having a portal site as any domain could be chosen to be what might be considered to be the master domain, i.e. the domain in which the collection server/cookie control server 4,5 resides.

In some instances, it may be necessary for the websites to be monitored to implement a security policy such as P3P to give successful operation.

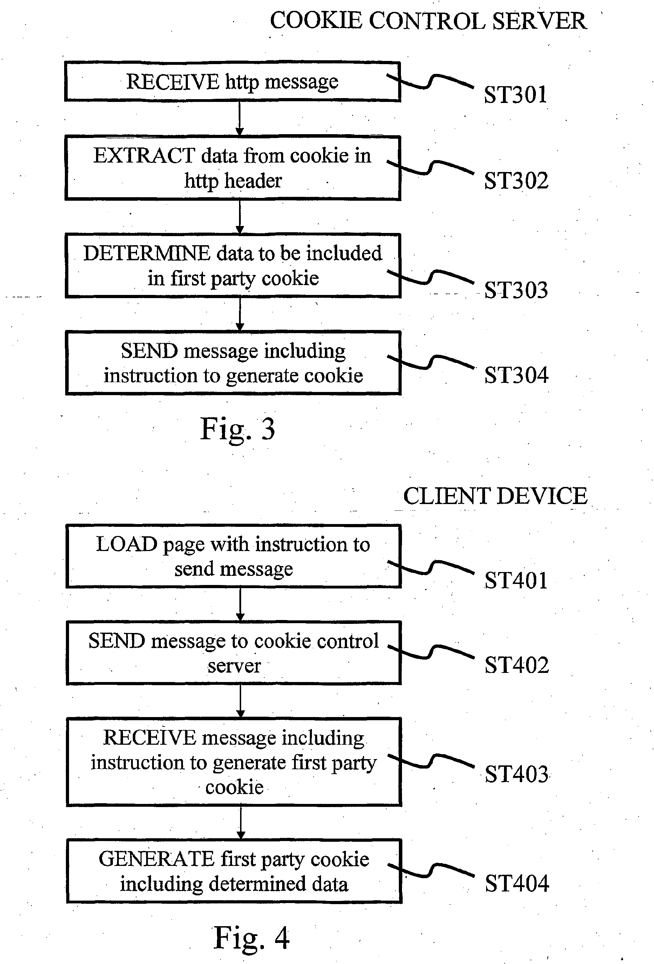

Figure 3 shows a flow chart showing the process carried out at the collection server 4 (in particular the cookie control server 5) when carrying out what could be termed as a cookie recovery part of the above process. In a first step ST301 an http message is received from a page 8. In a second step ST302 data from the first party cookie in the http header is extracted. In a third step ST303 the cookie control server 5 determines what data should be included in a first party cookie to be generated in the page 8 that sent the original http message in step ST301. In a fourth step ST304 the cookie control server 5 sends a message back to the originating page 8 including an instruction to generate a cookie including the required data.

In the embodiment described above, this process is used to extract a session ID from the first party cookie and to send an instruction to the page 8 to generate a cookie including the same session ID.

It will be appreciated, however, that this same process may be used in different ways. At the most basic level rather than extracting a session ID and reassigning the same session ID for the first party cookie to be generated, the cookie control server may rather determine that a modified session ID should be included in the cookie to be generated. Provided that the modified session ID can be tied together with an initial session ID this of course allows session continuity to be maintained.

A broader range of alternatives exist. Any data which is present in the first party cookie may be extracted. Similarly, the message sent back to the page may include any kind of instruction. Thus, for example if the first party cookie includes a customer ID, log-in details or a password, then this could be in at least some circumstances extracted and processed and fed back to the page sending the http message in step ST301.

This means, for example, that if a user is navigating through pages in one domain having had to log on to the appropriate website and then moves across to another domain, a secure user session may be seamlessly created for that user in the website on the new domain by virtue of the log-in details being extracted from the initial first party cookie in step ST302 and used to send a message in step ST304 to generate an appropriate first party cookie for the new domain.

Figure 4 shows a flow chart showing the cookie generation process from the client device 6 end. In a first step ST401 a page including an instruction to send an http message (i.e. a request for a page component, in particular, a piece of script) is loaded. In a second step ST402, the page 8 within the browser 7 on the client device 6 sends a message to the cookie control server 5. In a third step ST403 the page 8 receives back a message including an instruction to generate a first party cookie and in a fourth step ST404 the page generates the appropriate first party cookie. Of course, this first party cookie includes the data which it was determined it should include at the cookie control server 5.

Whilst the above description has been written in terms of a conventional PC running a conventional browser it will be appreciated that in alternatives the client device 6 may be differently constituted. In particular the client device might comprise a mobile telephone or other such device and might comprise an embedded browser.

In a development of the above embodiment a set of cookie control servers may be provided with one in each relevant domain to be monitored. The set of cookie control servers can be organised to synchronise their activities to allow the tracking of visitors (users) across domains. This would allow tracking of interactions with a whole group of sites in different domains (having appropriately linked cookie control servers) irrespective of which domain the user first visited.

The present invention may be embodied in one or more computer programs carried by machine readable media, for example, a signal, a CD-Rom, a flash memory device, a hard disk or so on, such programs being arranged to cause a server, client device or other computer (in the broadest sense) to operate as described above. Similarly the invention may be embodied in apparatus comprising a computer (in the broadest sense) set-up under the control of such programs to operate as described above.

## Claims

1. A method for setting a second domain first party cookie on a client device (6) including data extracted from a first domain first party cookie present on the client, comprising the steps of:
receiving at a server (5, 4) in the first domain, an http message issued from the client device in the second domain, while the client device runs a browser (7) within which a web page is loaded from a server in the second domain (2, 3), and
wherein the web page includes code that instructs the browser to send the http message to the server (5, 4) in the first domain;
extracting data from the first domain first party cookie present in the header of the http message;
determining data which is to be included in the second domain first party cookie in dependence on the data extracted from the first domain first party cookie present in the header of the http message; and
sending a message to the client device (6) running the browser within which the page in the second domain is loaded, said message including a script which when executed by the client device (6) will cause setting of a first party cookie in the second domain, including the data determined in the determining step, said cookie being the second domain first party cookie.

2. A method according to claim 1 wherein the step of extracting data from the cookie present in the header of the http message comprises the step of extracting a session ID from the cookie.

3. A method according to claim 1 or claim 2 wherein the message sent to the web page loaded in the browser includes an instruction to generate a cookie including a session ID determined in dependence on the extracted session ID.

4. A method according to any preceding claim comprising the further step of receiving further messages from the same web page and/or another web page within the browser (7) that include data derived from the generated cookie.

5. A method according to claim 4 wherein the further messages include a session ID derived from the generated cookie.

6. A method according to claim 4 or claim 5 where the data derived from the generated cookie comprises the generated cookie itself.

7. A method according to any preceding claim comprising the further step of the server (5, 4) receiving a plurality messages and determining whether the messages are from the same browser session in dependence on the data, derived from the generated cookie, present in each message.

8. A method according to any one of claims 1 to 6 comprising the further step of the server (5, 4) receiving a plurality messages and determining whether the messages are from the same browser session in dependence on session I Ds present in each message.

9. A method according to any preceding claim comprising the step of receiving monitoring information concerning webpage interactions and/or performance from the browser running on the client device.

10. A method according to claim 9 wherein there is a collection server (4) for collecting the monitoring information concerning website interactions and/or performance.

11. A method according to claim 10 wherein the server (5, 4) comprises the collection server (4).

12. A method according to any preceding claim wherein the message from the web page loaded in the browser comprises a request for a page component.

13. An apparatus for causing setting of a second domain first party cookie on a client device (6) including data extracted from a first domain first party cookie, present on the client, the apparatus comprising a server (5, 4), in a first domain, arranged under the control of software to:
receive an http message issued from the client device (6), in the second domain, while the client device runs a browser within which a web page is loaded in the second domain, from a server in the second domain (2, 3), and wherein the web page includes code that instructs the browser to send the http message to the server (5, 4) in the first domain;
extract data from the first domain first party cookie present in the header of the http message;
determine data which is to be included in the second domain first party cookie in dependence on the data extracted from the first domain first party cookie present in the header of the http message; and
send a message to the client device (6) running the browser within which the page in the second domain is loaded, said message including a script which when executed by the client device (6) will cause setting of a first party cookie in the second domain, including the data determined in the determining step, said cookie being the second domain first party cookie.

14. A website monitoring system comprising:
a) an apparatus for causing setting of a second domain first party cookie according to claim 13; and
b) a collection server (4) arranged under the control of software to:
receive, from the browser running on the client device, messages including data derived from the generated second domain first party cookie and information concerning at least one of: interactions with and performance of at least one web page browsed within the browser running on the client device (6); and
determine whether received messages are from the same browser session in dependence on the data derived from the generated second domain first party cookie present in each message.

15. A method according to any one of claims 1 to 12 comprising the further steps at a client device (6) of:
sending from the client device the http message having a header including the first domain first party cookie whilst a page of the second domain is loaded in the browser (7) running on the device (6);
receiving at the client device the message including the script whilst a page of the second domain is loaded in the browser (7); and
executing the script to generate within the browser running on the client device (6) the second domain first party cookie.

16. A client device arranged for setting a second domain first party cookie including data extracted from a first domain first party cookie, present on the client device, the client device being arranged under the control of software to:
load a web page from a second server (2, 3) in the second domain in a browser (7) running on the client device, the web page including code that instructs the browser to send an http message to a server (5, 4) in the first domain;
send the http message from the client device to the server (5, 4) in the first domain, wherein the http message includes a header comprising the first domain first party cookie;
receive a message from the server whilst the web page of the second domain is loaded in the browser (7), the message including a script which when executed by the client device will cause setting of a first party cookie in the domain of the client device (6) including data determined by the server in dependence on data extracted from the first domain first party cookie included in the header of the http message sent to the server; and
execute the script to generate the second domain first party cookie within the browser (7).

17. A computer program product comprising computer program code portions which when loaded and run on a computer, or set of computers, cause the computer or set of computers to carry out any one of the methods claimed in claims 1 to 12, and 15.

## Patentansprüche

1. Verfahren zum Setzen eines Erstpartei-Cookie einer zweiten Domain auf einem Client-Gerät (6), das Daten enthält, die aus einem auf dem Client-Gerät vorhandenen Erstpartei-Cookie einer ersten Domain extrahiert wurden, wobei es die folgenden Schritte umfasst:
Empfangen, bei einem Server (5, 4) in der ersten Domain, einer http-Nachricht, die von dem Client-Gerät in der zweiten Domain ausgegeben wird, während auf dem Client-Gerät ein Browser (7) läuft, in den eine Webseite von einem Server in der zweiten Domain (2, 3) geladen ist, und wobei die Webseite Code enthält, die den Browser anweist, die http-Nachricht an den Server (5, 4) in der ersten Domain zu senden;
Extrahieren von Daten aus dem Erstpartei-Cookie der ersten Domain, das in dem Header der http-Nachricht vorhanden ist;
Bestimmen von Daten, die in das Erstpartei-Cookie der zweiten Domain einzuschließen sind, und zwar in Abhängigkeit von den Daten, die aus dem Erstpartei-Cookie der ersten Domain extrahiert wurden, das in dem Header der http-Nachricht vorhanden ist; und
Senden einer Nachricht an das Client-Gerät (6), auf dem der Browser läuft, in den die Seite in der zweiten Domain geladen ist, wobei die Nachricht ein Skript beinhaltet, das, wenn es durch das Client-Gerät (6) ausgeführt wird, das Setzen eines Erstpartei-Cookie in der zweiten Domain veranlasst, das die in dem Bestimmungsschritt bestimmten Daten enthält, wobei das Cookie das Erstpartei-Cookie der zweiten Domain ist.

2. Verfahren nach Anspruch 1, wobei der Schritt, bei dem Daten aus dem Cookie extrahiert werden, das in dem Header der http-Nachricht vorhanden ist, den Schritt umfasst, bei dem eine Sitzungs-ID aus dem Cookie extrahiert wird.

3. Verfahren nach Anspruch 1 oder Anspruch 2, wobei die Nachricht, die an die in den Browser geladene Webseite gesendet wird, eine Anweisung beinhaltet, ein Cookie zu erzeugen, das eine Sitzungs-ID beinhaltet, die in Abhängigkeit von der extrahierten Sitzungs-ID bestimmt wird.

4. Verfahren nach einem der vorhergehenden Ansprüche, das den weiteren Schritt umfasst, bei dem weitere Nachrichten von derselben Webseite und/oder einer anderen Webseite in dem Browser (7) empfangen werden, die Daten enthalten, welche von dem erzeugten Cookie hergeleitet wurden.

5. Verfahren nach Anspruch 4, wobei die weiteren Nachrichten eine Sitzungs-ID enthalten, die aus dem erzeugten Cookie hergeleitet wurde.

6. Verfahren nach Anspruch 4 oder Anspruch 5, bei dem die aus dem erzeugten Cookie hergeleiteten Daten das erzeugte Cookie selbst aufweisen.

7. Verfahren nach einem der vorhergehenden Ansprüche, das den weiteren Schritt umfasst, bei dem der Server (5, 4) eine Mehrzahl von Nachrichten empfängt und bestimmt, ob die Nachrichten aus derselben Browser-Sitzung sind, und zwar in Abhängigkeit von den aus dem erzeugten Cookie hergeleiteten Daten, die in jeder Nachricht vorhanden sind.

8. Verfahren nach einem der vorhergehenden Ansprüche 1 bis 6, das den weiteren Schritt umfasst, bei dem der Server (5, 4) eine Mehrzahl von Nachrichten empfängt und bestimmt, ob die Nachrichten aus derselben Browser-Sitzung sind, und zwar in Abhängigkeit von Sitzungs-IDs, die in jeder Nachricht vorhanden sind.

9. Verfahren nach einem der vorhergehenden Ansprüche, das den Schritt umfasst, bei dem Überwachungsinformation empfangen wird, welche Webseiten-Interaktionen und/oder Performanz betrifft, und zwar von dem auf dem Client-Gerät laufenden Browser.

10. Verfahren nach Anspruch 9, wobei es einen Sammel-Server (4) gibt, welcher die Überwachungsinformation betreffend Website-Interaktionen und/oder Performanz sammelt.

11. Verfahren nach Anspruch 10, wobei der Server (5, 4) den Sammel-Server (4) beinhaltet.

12. Verfahren nach einem der vorhergehenden Ansprüche, wobei die Nachricht aus der in den Browser geladenen Webseite eine Anfrage nach einem Seiten-Bestandteil aufweist.

13. Vorrichtung zum Veranlassen eines Setzens eines Erstpartei-Cookie einer zweiten Domain auf einem Client-Gerät (6), das Daten enthält, die aus einem auf dem Client-Gerät vorhandenen Erstpartei-Cookie einer ersten Domain extrahiert wurden, wobei die Vorrichtung, die einen Server (5, 4) in einer ersten Domain aufweist, gesteuert durch Software angeordnet ist, um:
eine http-Nachricht zu empfangen, die von dem Client-Gerät in der zweiten Domain ausgegeben wird, während auf dem Client-Gerät ein Browser läuft, in den eine Webseite von einem Server in der zweiten Domain (2, 3) geladen ist, und wobei die Webseite Code enthält, die den Browser anweist, die http-Nachricht an den Server (5, 4) in der ersten Domain zu senden;
Daten aus dem Erstpartei-Cookie der ersten Domain zu extrahieren, das in dem Header der http-Nachricht vorhanden ist;
Daten zu bestimmen, die in das Erstpartei-Cookie der zweiten Domain einzuschließen sind, und zwar in Abhängigkeit von den Daten, die aus dem Erstpartei-Cookie der ersten Domain extrahiert wurden, das in dem Header der http-Nachricht vorhanden ist; und
eine Nachricht an das Client-Gerät (6) zu senden, auf dem der Browser läuft, in den die Seite in der zweiten Domain geladen ist, wobei die Nachricht ein Skript beinhaltet, das, wenn es durch das Client-Gerät (6) ausgeführt wird, das Setzen eines Erstpartei-Cookie in der zweiten Domain veranlasst, das die in dem Bestimmungsschritt bestimmten Daten enthält, wobei das Cookie das Erstpartei-Cookie der zweiten Domain ist.

14. Website-Überwachungssystem, aufweisend:
a) eine Vorrichtung zum Veranlassen eines Setzens eines Erstpartei-Cookie einer zweiten Domain nach Anspruch 13; und
b) einen Sammel-Server (4), der gesteuert durch Software angeordnet ist, um:
von dem auf dem Client-Gerät laufenden Browser Nachrichten zu empfangen, die Daten, welche aus dem erzeugten Erstpartei-Cookie der zweiten Domain hergeleitet wurden, und Information beinhalten, welche Interaktionen mit, und/oder Performanz von, mindestens einer Webseite betrifft, die in dem auf dem Client-Gerät (6) laufenden Browser betrachtet wird; und
zu bestimmen, ob empfangene Nachrichten aus derselben Browser-Sitzung sind, und zwar in Abhängigkeit von den Daten, die aus dem erzeugten Erstpartei-Cookie der zweiten Domain hergeleitet werden, das in jeder Nachricht vorhanden ist.

15. Verfahren nach einem der Ansprüche 1 bis 12, das bei einem Client-Gerät (6) die weiteren Schritte umfasst, bei denen:
von dem Client-Gerät die http-Nachricht gesendet wird, welche einen Header aufweist, der das Erstpartei-Cookie der ersten Domain beinhaltet, während eine Seite der zweiten Domain in den auf dem Gerät (6) laufenden Browser (7) geladen ist;
bei dem Client-Gerät die Nachricht empfangen wird, welche das Skript beinhaltet, während eine Seite der zweiten Domain in den Browser (7) geladen ist; und
das Skript ausgeführt wird, um in dem auf dem Client-Gerät (6) laufenden Browser das Erstpartei-Cookie der zweiten Domain zu erzeugen.

16. Client-Gerät, das zum Setzen eines Erstpartei-Cookie einer zweiten Domain angeordnet ist, welches Daten beinhaltet, die aus einem Erstpartei-Cookie der ersten Domain extrahiert wurden, das auf dem Client-Gerät vorhanden ist, wobei das Client-Gerät gesteuert durch Software angeordnet ist, um:
eine Webseite von einem zweiten Server (2, 3) in der zweiten Domain in einen auf dem Client-Gerät laufenden Browser (7) zu laden, wobei die Webseite Code beinhaltet, der den Browser anweist, eine http-Nachricht an einen Server (5, 4) in der ersten Domain zu senden;
die http-Nachricht von dem Client-Gerät an den Server (5, 4) in der ersten Domain zu senden, wobei die http-Nachricht einen Header beinhaltet, der das Erstpartei-Cookie der ersten Domain aufweist;
eine Nachricht von dem Server zu empfangen, während die Webseite der zweiten Domain in den Browser (7) geladen ist, wobei die Nachricht ein Skript beinhaltet, das, wenn es durch das Client-Gerät ausgeführt wird, das Setzen eines Erstpartei-Cookie in der Domain des Client-Gerät (6) veranlasst, das Daten beinhaltet, die durch den Server in Abhängigkeit von Daten bestimmt wurden, welche aus dem Erstpartei-Cookie der ersten Domain extrahiert wurden, das in dem Header der an den Server gesendeten http-Nachricht enthalten ist; und
das Skript auszuführen, um das Erstpartei-Cookie der zweiten Domain im Browser (7) zu erzeugen.

17. Computerprogrammprodukt, das Computerprogramm-Codeabschnitte aufweist, die, wenn sie in einen Computer oder einen Satz von Computern geladen sind und auf diesem laufen, den Computer oder den Satz von Computer veranlassen, eines der Verfahren nach den Ansprüchen 1 bis 12, und 15 auszuführen.

## Revendications

1. Procédé de réglage d'un cookie nominatif de deuxième domaine sur un dispositif client (6) incluant des données extraites d'un cookie nominatif de premier domaine présent sur le client, comprenant les étapes de :
recevoir à un serveur (5, 4) dans le premier domaine, un message http émis par le dispositif client dans le deuxième domaine, pendant que le dispositif client exécute un navigateur (7) dans lequel une page web est chargée d'un serveur dans le deuxième domaine (2, 3), et où la page web comprend un code qui instruit le navigateur d'envoyer le message http au serveur (5, 4) dans le premier domaine ;
extraire les données du cookie nominatif de premier domaine présent dans l'en-tête du message http ;
déterminer les données qui doivent être incluses dans le cookie nominatif de deuxième domaine en fonction des données extraites du cookie nominatif de premier domaine présent dans l'en-tête du message http ; et
envoyer un message au dispositif client (6) exécutant le navigateur dans lequel la page dans le deuxième domaine est chargée, ledit message incluent un script qui, lorsqu'il est exécuté par le dispositif client (6), provoquera le réglage d'un cookie nominatif dans le deuxième domaine, incluant les données déterminées à l'étape de détermination, ledit cookie étant le cookie nominatif du deuxième domaine.

2. Procédé selon la revendication 1, dans lequel l'étape consistant à extraire des données du cookie présent dans l'en-tête du message http comprend l'étape consistant à extraire un ID de la session du cookie.

3. Procédé selon la revendication 1 ou la revendication 2, dans lequel le message envoyé à la page web chargée dans le navigateur comprend une instruction pour produire un cookie incluant l'ID d'une session déterminée en fonction de l'ID extrait de la session extraite.

4. Procédé selon l'une quelconque des revendications précédentes, comprenant l'étape ultérieure consistant à recevoir d'autres messages de la même page web et/ou une autre page web dans le navigateur (7) qui inclut des données dérivées du cookie produit.

5. Procédé selon la revendication 4, dans lequel les autres messages incluent un ID de la session dérivé du cookie produit.

6. Procédé selon la revendication 4 ou la revendication 5, dans lequel les données dérivées du cookie produit comprennent le cookie produit lui-même.

7. Procédé selon l'une quelconque des revendications précédentes, comprenant l'étape ultérieure du serveur (5, 4) recevant une pluralité de messages et déterminer si les messages proviennent de la même session de navigateur en fonction des données, dérivées du cookie produit, présent dans chaque message.

8. Procédé selon l'une quelconque des revendications 1 à 6, comprenant l'étape ultérieure du serveur (5, 4) recevant une pluralité de messages et déterminer si les messages proviennent de la même session de navigateur en fonction des IDs de session présents dans chaque message.

9. Procédé selon l'une quelconque des revendications précédentes, comprenant l'étape consistant à recevoir des informations de surveillance concernant des interactions et/ou la performance de la page web du navigateur en exécution sur le dispositif client.

10. Procédé selon la revendication 9, dans lequel est réalisé un serveur de collecte (4) pour recueillir les informations de surveillance concernant les interactions et/ou la performance du site web.

11. Procédé selon la revendication 10, dans lequel le serveur (5, 4) comprend le serveur de collecte (4).

12. Procédé selon l'une quelconque des revendications précédentes, dans lequel le message de la page web chargée dans le navigateur comprend une requête d'un composant de page.

13. Appareil pour provoquer le réglage d'un cookie nominatif de deuxième domaine sur un dispositif client (6) incluant des données extraites d'un cookie nominatif de premier domaine présent sur le client, l'appareil comprenant un serveur (5, 4) dans un premier domaine, agencé sous la commande d'un logiciel pour :
recevoir un message http émis par le dispositif client (6), dans le deuxième domaine, pendant que le dispositif client exécute un navigateur dans lequel une page web est chargée dans le deuxième domaine, d'un serveur dans le deuxième domaine (2, 3), et où la page web inclut un code qui instruit le navigateur d'envoyer le message http au serveur (5, 4) dans le premier domaine ;
extraire des données du cookie nominatif de premier domaine présent dans l'en-tête du message http ;
déterminer des données devant être incluses dans le cookie nominatif de deuxième domaine en fonction des données extraites du cookie nominatif de premier domaine présent dans l'en-tête du message http ; et
envoyer un message au dispositif client (6) exécutant le navigateur dans lequel la page dans le deuxième domaine est chargée, ledit message incluant un script qui, lorsqu'il est exécuté par le dispositif client (6), provoquera le réglage d'un cookie nominatif dans le deuxième domaine, incluant les données déterminées à l'étape de détermination, ledit cookie étant le cookie nominatif de deuxième domaine.

14. Système de surveillance de site web comprenant :
a) un appareil pour provoquer le réglage d'un cookie nominatif de deuxième domaine selon la revendication 13 ; et
b) un serveur de collecte (4) agencé sous la commande d'un logiciel à :
recevoir, du navigateur en exécution sur le dispositif client, des messages incluant des données dérivées du cookie nominatif de deuxième domaine produit et des informations concernant au moins une de : interactions avec et performance d'au moins une page web consultée dans le navigateur en exécution sur le dispositif client (6) ; et
déterminer si les messages reçus proviennent de la même session de navigation en fonction des données dérivées du cookie nominatif de deuxième domaine produit présent dans chaque message.

15. Procédé selon l'une quelconque des revendications 1 à 12 comprenant les étapes ultérieures à un dispositif client (6) de :
envoyer du dispositif client le message http ayant une en-tête incluant le cookie nominatif de premier domaine pendant qu'une page du deuxième domaine est chargée dans le navigateur (7) en exécution sur le dispositif (6) ;
recevoir au dispositif client le message incluant le script pendant qu'une page du deuxième domaine est chargée dans le navigateur (7) ; et
exécuter le script pour produire dans le navigateur en exécution sur le dispositif client (6) le cookie nominatif de deuxième domaine.

16. Dispositif client agencé pour le réglage d'un cookie nominatif de deuxième domaine incluant des données
extraites d'un cookie nominatif de premier domaine présent sur le dispositif client, le dispositif client étant agencé sous la commande d'un logiciel pour :
charger une page web d'un deuxième serveur (2, 3) dans le deuxième domaine dans un navigateur (7) en exécution sur le dispositif client, la page web incluant un code qui instruit le navigateur d'envoyer un message http à un serveur (5, 4) dans le premier domaine ;
envoyer le message http du dispositif client au serveur (5, 4) dans le premier domaine, où le message http inclut une en-tête comprenant le cookie nominatif de premier domaine ;
recevoir un message du serveur pendant que la page web du deuxième domaine est chargée dans le navigateur (7), le message incluant un script qui, lorsqu'il est exécuté par le dispositif client, provoquera le réglage d'un cookie nominatif dans le domaine du dispositif client (6) incluant des données déterminées par le serveur en fonction des données extraites du cookie nominatif de premier domaine inclus dans l'en-tête du message http envoyé au serveur ; et
exécuter le script pour produire le cookie nominatif de deuxième domaine dans le navigateur (7).

17. Produit de programme d'ordinateur comprenant des portions de code programme d'ordinateur qui, lorsqu'elles sont chargées et exécutées sur un ordinateur, ou un ensemble d'ordinateurs, amènent l'ordinateur ou l'ensemble d'ordinateurs à exécuter l'un quelconque des procédés revendiqués dans les revendications 1 à 12 et 15.
